# EUROPÄISCHE PATENTSCHRIFT

(11) **EP 3 067 640 B1**
(45) Veröffentlichungstag und Bekanntmachung des Hinweises auf die Patenterteilung: **07.08.2019**
(21) Anmeldenummer: 16159464.3
(22) Anmeldetag: 09.03.2016
(51) Int. Cl.: F24S 70/30, F24S 40/50

(54) **SOLARABSORBER**
SOLAR ABSORBER
ABSORBEUR SOLAIRE

(30) Priorität: 09.03.2015 DE 102015103394
(43) Veröffentlichungstag der Anmeldung: 14.09.2016
(73) Patentinhaber: Viessmann Werke GmbH & Co. KG, 35108 Allendorf (DE)
(72) Erfinder: Hafner, Bernd, 35108 Allendorf (DE); Mercs, David, 57380 Faulquemont (FR); Pazidis, Alexandra, 73457 Essingen (DE)
(74) Vertreter: Sperschneider, Alexandra

(56) Entgegenhaltungen:
- EP-A1- 2 604 585
- EP-A1- 2 679 555
- EP-A2- 2 514 724
- DE-A1- 4 433 863
- FR-A1- 3 008 170
- US-A- 3 473 602
- US-A- 5 433 056
- US-A1- 2008 038 454

## Beschreibung

Die Erfindung betrifft einen Solarabsorber gemäß dem Oberbegriff des Patentanspruchs 1 sowie ein Herstellungsverfahren des Solarabsorbers gemäß Patentanspruch 13.

Ein Solarabsorber der eingangs genannten Art ist aus dem Patentdokument DE 11 2011 103 911 T5 bekannt. Ein solcher thermischer Solarabsorber dient dazu, solare Wärme an ein mit dem Solarabsorber in Kontakt stehendes fluides Wärmeträgermedium zu übertragen, das dann seinerseits die aufgenommene Wärme zum Beispiel an ein Heizungssystem eines Gebäudes abgibt. Der in dem oben genannten Patentdokument genannte Solarabsorber besteht dabei aus einem Absorberelement mit einer infrarote Strahlung reflektierenden Oberfläche, die mit einer aus einem Basismetalloxid bestehenden, thermochromen Schicht versehen ist, wobei diese unterhalb einer Schalttemperatur (auch kritische Temperatur genannt) - noch halbleitend - eine niedrigere und oberhalb der Schalt-temperatur - nunmehr metallisch - eine höherere elektrische Leitfähigkeit aufweist. Die thermochrome Schicht ist dabei vorgesehen, um die optischen Eigenschaften des Solarabsorbers in Abhängigkeit von der Temperatur beeinflussen zu können. Es besteht nämlich das Problem, dass das den Solarabsorber durchströmende Wärmeträgermedium (typischer Weise Wasser) aus Frostschutzgründen zum Beispiel mit Glykol versetzt ist und dass gerade dieses Frostschutzmittel empfindlich (zum Beispiel durch Zersetzung) auf zu hohe Temperaturen am Solarabsorber reagiert. Das der thermochromen Schicht zugrunde liegende Konzept besteht dabei in bekannter Weise letztlich darin, dass durch Vergrößerung der Emissivität (zum Beispiel von 5% auf 25%) ab Erreichen der Schalttemperatur ein weiterer Wärmeeintrag ins temperaturempfindliche Wärmeträgermedium deutlich verringert wird.

Die D1 (DE 44 33 863 A1) offenbart eine spektralselektive Kollektorbeschichtung, welche Schichten aus dielektrischen und absorbierenden Materialien aufweist. Weiterhin offenbart die FR 3 008 170 A1 (D2) einen Sonnenkollektor mit einer dotierten Vanadiumdioxidschicht.

Der Erfindung liegt die Aufgabe zugrunde, einen Solarabsorber der eingangs genannten Art zu verbessern. Insbesondere soll ein Solarabsorber geschaffen werden, der oberhalb der Schalttemperatur eine noch größere Emissivität im infraroten Bereich als bisher aufweist.

Diese Aufgabe ist mit einem Solarabsorber der eingangs genannten Art durch die im Kennzeichen des Patentanspruchs 1 aufgeführten Merkmale gelöst.

Nach der Erfindung ist also vorgesehen, dass das Basismetalloxid zur Veränderung, insbesondere zur Verringerung, der elektrische Leitfähigkeit und damit zur Erhöhung der Emissivität im infraroten Bereich oberhalb der Schalt-temperatur mit einem weiteren Metall und einem Element der Kohlenstoffgruppe (Vierte Hauptgruppe des Periodensystems) dotiert.

Mit anderen Worten zeichnet sich die erfindungsgemäße Lösung somit dadurch aus, dass insbesondere durch das Dotieren des Basismetalloxids, das besonders bevorzugt aus Vanadiumoxid oder Titandioxid besteht, mit einem weiteren Metall und einem Element der Kohlenstoffgruppe die elektrische Leitfähigkeit (also die Fähigkeit eines Stoffes, elektrischen Strom zu leiten - siehe auch http://de.wikipedia.org/w/index.php?title=Elektrische_Leitf%C3%A4higkeit&oldid=139374402) der thermochromen Schicht oberhalb der Schalttemperatur ganz bewusst bzw. absichtlich verändert, insbesondere verschlechtert, wird. Es hat sich nämlich zum Beispiel bei Verwendung von Vanadiumoxid oder auch Titanoxid (insbesondere Ti₂O₃) als Basismetalloxid überraschend herausgestellt, dass sich eine niedrigere elektrische Leitfähigkeit positiv auf die Emissivität im infraroten Bereich auswirkt, d. h., die im Absorberelement vorhandene und oberhalb der Schalttemperatur nicht (mehr) erwünschte Wärme kann besser an die Umgebung des Solarabsorbers abgestrahlt werden. Unterhalb der Schalttemperatur wird die Emissivität durch die Dotierung nicht weiter beeinflusst.

Darüber hinaus hat es sich überraschenderweise gezeigt, dass die hier beschriebene thermochrome Schicht des Solarabsorbers, welche eine Dotierung mit einem Metall und einem Element der Kohlenstoffgruppe aufweist, eine Verringerung der elektrischen Leitfähigkeit ausbildet und zugleich die Schalttemperatur unverändert bleibt. Dies ist dem vorteilhaften Synergieeffekt zwischen der Metalldotierung und der zusätzlichen Dotierung mit einem Element der Kohlenstoffgruppe geschuldet.

Wird als Basismetalloxid beispielsweise Vanadiumoxid verwendet, so kann dessen elektrische Leitfähigkeit durch den Synergieeffekt von Metalldotierung und zusätzlicher Dotierung mit einem Element der Kohlenstoffgruppe reduziert werden, wobei die Schalttemperatur von um die 70 °C unverändert verbleibt.

Unter Dotieren versteht man vorteilhaft das Einbringen von Fremdatomen in das Grundmaterial, hier das Basismetalloxid, (siehe hierzu auch den Artikel: http://de.wikipedia.org/w/index.php?title=Dotierung&oldid= 137887179).

Aus dem vorgenannten Dokument DE 11 2011 103 911 T5 ist es dabei zwar an sich bereits bekannt, das Basismetalloxid zu dotieren, dort dient die Dotierung aber dazu, Einfluss auf die Schalttemperatur selbst zu nehmen. Es ist nicht offenbart, die Dotierung gezielt zur Verbesserung der Emissivität im infraroten Bereich oberhalb der Schalttemperatur einzusetzen.

Andere vorteilhafte Weiterbildungen des erfindungsgemäßen Solarabsorbers ergeben sich aus den abhängigen Patentansprüchen.

Bei einer weiteren vorteilhaften Ausführungsform ist das weitere Metall aus der Erdalkalimetallgruppe, Alkalimetallgruppe, Borgruppe, Eisengruppe, Titangruppe, Chromgruppe und/oder Scandiumgruppe ausgewählt. Besonders vorteilhaft ist weiterhin, wenn das weitere Metall eine maximale Wertigkeit von (+III) oder weniger aufweist. Bei Metallen aus den oben genannten Gruppen handelt es sich um Elektronenakzeptoren, welche sich besonders leicht in dem Basismetalloxid einfügen lassen. Die maximale Wertigkeit von (+III) oder weniger bezieht sich auf den entsprechenden Oxidationszustand des weiteren Metalls. Besonders vorteilhaft haben sich Metalloxide erwiesen, welche eine deutlich geringere Leitfähigkeit als das Basismetalloxid aufweisen.

Die Dotierung der das Basismetalloxid enthaltenden, thermochromen Schicht erfolgt durch Zuführen von Metallkationen, welche die maximale Wertigkeit von (+III) oder weniger aufweisen. Die maximale Wertigkeit von (+III) oder weniger hat sich als besonders vorteilhaft erwiesen, da hierdurch die elektrische Leitfähigkeit der thermochromen Schicht oberhalb der Schalttemperatur verringert wird. Die von der Erfindung zur Dotierung verwendet maximal dreiwertigen Metallkationen weisen ein Ladungsdefizit von maximal drei negativen Ladungen auf, so dass sie hervorragend mit dem Sauerstoff des Basismetalloxids in Wechselwirkung treten können und sich problemlos und einfach in die thermochrome Basismetalloxidschicht einbringen lassen.

Die thermochrome Schicht, mit dem wesentlichen Bestandteil an Basismetalloxid, wird durch die Dotierung mit maximal dreiwertigen Metallkationen in einem halbmetallischen Zustand gehalten.

Bei einer weiteren vorteilhaften Ausführungsform besteht das weitere Metall aus Aluminium, Kalium, Eisen, Titan, Chrom, Lithium, Natrium, Kalium, Yttrium, Zirkonium, Kalzium, Indium oder Lanthan. Vorteilhaft erfolgt die bereits oben beschriebene Dotierung mit den hier aufgeführten, maximal dreiwertigen Metallkationen. Diese Begrenzung des Oxidationszustandes gilt in diesem Fall auch für Titan und Chrom, so dass höherwertige Oxidationszustände von beiden Elementen in der vorliegenden Erfindung nicht verwendet werden. Das genannte metallische Material zum Dotieren liegt dabei bevorzugt ebenfalls als Metalloxid vor.

Es hat sich als besonders vorteilhaft erwiesen, dass weitere Metall mit einer vorbestimmbaren Dotierungskonzentration innerhalb der thermochromen Schicht vorzusehen. Als besonders vorteilhaft haben sich Dotierungskonzentrationen im Bereich von 0,01 bis 25 Atomprozent, vorteilhafter von einem bis neun Atomprozent erwiesen.

Bei einer weiteren vorteilhaften Ausführungsform ist als Element der Kohlenstoffgruppe Silizium vorgesehen. Es hat sich überraschenderweise gezeigt, dass das Vorsehen von Silizium als Element der Kohlenstoffgruppe zusätzlich zu der metallischen Dotierung der Basismetalloxidschicht einen Synergieeffekt hervorruft, so dass die elektrische Leitfähigkeit oberhalb der Schaltemperatur hierdurch zusätzlich verringert werden kann. Somit kann ein zusätzlicher, beeinflussender Effekt auf die Emissivität infraroter Strahlung im Wellenbereich von größer 1 µm gezielt erzeugt werden, in dem die elektrische Leitfähigkeit der thermochromen Schicht herabgesetzt wird. Als besonders vorteilhaft haben sich Dotierungskonzentrationen von Silizium im Bereich von 0,01 bis 15 Atomprozent, vorteilhafter von einem bis sieben Atomprozent erwiesen.

Zum Einbringen des Siliziums in die Basismetalloxidschicht kann das Silizium in Analogie zu dem weiteren Metall durch Dotierung bereits im Herstellungsprozess der Basismetalloxidschicht in diese eingebracht werden. Darüber hinaus hatte sich überraschenderweise als vorteilhaft gezeigt, wenn das Silizium durch diffusionsgetriebene Dotierung in die Basismetalloxidschicht, beispielsweise während eines Temperprozess, gezielt und kontrolliert eingebracht wird.

Bei einer weiteren vorteilhaften Ausführungsform besteht das Basismetalloxid aus Vanadiumoxid und/oder Titandioxid. Insbesondere Vanadiumoxid, welches beispielsweise als VO, VO₂ oder V₂O₃ in der thermochromen Schicht vorkommen kann, erweist sich mit einer Schalttemperatur von um die 70 °C als vorteilhaftes Basismetalloxid. Es ist denkbar, dass Basismetalloxid der thermochromen Schicht zunächst in amorpher Form auf das Absorberelement aufzubringen, beispielsweise mittels PVD-Verfahren oder Sputtern. Die Dotierung mit dem weiteren Metall kann bereits während dieses Aufbringens und/oder danach erfolgen.

Erfindungsgemäß hat es sich nunmehr überraschenderweise gezeigt, dass durch Temperaturbeaufschlagung zur Kristallisation der amorphen, thermochromen Schicht in vorbestimmbaren Zeitintervallen und Temperaturgrößen, die amorphe Schicht nicht nur größtenteils in eine kristalline Schicht umwandelbar ist bzw. umgewandelt werden kann, sondern auch, dass insbesondere je nach Temperaturbeaufschlagung und Zeitdauer, beispielsweise in Form eines Temperprozesses, das in der thermochromen Schicht enthaltende Basismetalloxid, beispielsweise Vanadiumoxid oder Titanoxid, zusammen mit dem Dotierungsmaterial in Oxidform vorteilhaft Kristallite zur Verringerung der spezifischen elektrischen Leitfähigkeit in den Bereich 10 bis 500 1/(Ohm*cm) ausbildet.

Bei einer weiteren vorteilhaften Ausführungsform besteht das Absorberelement wahlweise aus Aluminium, Kupfer oder dergleichen. Besonders vorteilhaft ist das Absorberelement aus wenigstens einem Metall ausgebildet, beispielsweise aus einem Aluminiumsblech oder einem Kupferblech. Dies ist von Vorteil, da hierdurch bereits metallische Materialien, vorteilhaft als Metalloxide ausgebildet, bereitgestellt werden. Sowohl Aluminiumbleche als auch Kupferbleche weisen an ihrer Oberfläche eine oxidische Passivierungsschicht auf. In dieser Passivierungsschicht liegen die jeweiligen Metalle als bewegliche Kationen vor. Wird nun die thermochrome Schicht auf die Passivierungsschicht des Absorberelements aufgebracht, beispielsweise mittels PVD-Verfahren, so hat es sich überraschenderweise gezeigt, dass die Kationen der Passivierungsschicht besonders vorteilhaft bei Temperaturbeaufschlagung des Solarabsorbers, beispielsweise in einem Temperprozess, in die thermochrome Schicht diffundieren und in der thermochromen Schicht eine diffusionsgetriebene quasi-Dotierung mit den Kationen aus der Passivierungsschicht des Absorberelements erfolgt. In Abhängigkeit von der Temperaturbeaufschlagung, vorteilhaft einen Temperprozess, und der hierzu verwendeten Zeit ist es möglich, die quasi-Dotierung gezielt zu steuern und die thermochrome Schicht mit vorbestimmbaren Atomprozent (at.%) an Kationen zu dotieren.

Als nicht Erfindungsgemäße Alternative oder auch als Ergänzung zum Dotieren kommt ferner in Betracht, dass Basismetalloxid gezielt mit Fehlstellen zu versehen. Besonders vorteilhaft liegt der Bereich der Metallfehlstellen, vorteilhaft der Vanadium-Fehlstellen oder Titan-Fehlstellen, in der thermochromen Schicht bei 0,01 bis 30 Atomprozent, vorteilhafter im Bereich von 0,1 bis 10 Atomprozent.

Im einfachsten Fall werden die Fehlstellen durch den Temperprozess mit vorbestimmbarer Temperaturbeaufschlagung in einem vorbestimmbaren Zeitintervall ausgebildet. Es ist aber auch denkbar, dass die Fehlstellen durch gezielte Bestrahlung der thermochromen Schicht erzeugt werden, in dem die Metallkationen aus der Schicht gezielt heraus geschlagen werden und beispielsweise Löcher oder Poren hinterlassen.

Diese Fehlstellen haben sich als vorteilhaft erwiesen, da sie zusätzlich zu der oben genannten Dotierung ebenfalls einen Synergieeffekt ausbilden und zur Verringerung der elektrischen Leitfähigkeit oberhalb der Schalttemperatur beitragen.

Als besonders vorteilhaft sind die Fehlstellen als Löcher, Kristallgrenzen oder Poren ausgebildet. Im einfachsten Fall handelt es sich bei den Fehlstellen folglich um Löcher im Sinne von Defekten, welche auch als Schottky-Fehlstellen und/oder Frenkel-Fehlstellen.

Ist das Basismetalloxid als Kristallite in der thermochromen Schicht ausgebildet, so weist die thermochrome Schicht eine Vielzahl an Kristallgrenzen, auch Korngrenzen genannt, auf. Es hat sich überraschenderweise gezeigt, dass eine hohe Anzahl an Korngrenzen innerhalb der thermochromen Schicht vorteilhaft ist, um die Einstellung der elektrischen Leitfähigkeit umzusetzen und diese zu reduzieren.

Um eine besonders einfache Einstellung der elektrischen Leitfähigkeit zu erreichen, sind in der aus Basismetalloxid bestehenden, thermochromen Schicht wenigstens 1.000 bis 1.000.000 Kristallite und/oder Kristalle pro Kubikmikrometer ausgebildet. Besonders vorteilhaft haben sich Kristallite und/oder Kristalle gezeigt, welche eine symmetrische Korngrenzenlänge im Bereich von 15 nm bis 25 nm aufweisen. Als ganz besonders vorteilhaft haben sich Kristallite und/oder Kristalle von 15 nm x 15 nm x 15 nm, 20 nm x 20 nm x 20 nm und 25 nm x 25 nm x 25 nm erwiesen. Besonders vorteilhaft hat sich eine Kristallit- und/oder Kristallanzahl pro Kubikmikrometer von 50.000 bis 400.000, noch vorteilhafter von 100.000 bis 200.000 herausgestellt. Vorteilhafter Weise weisen die Kristallite und/oder Kristalle der Basismetalloxidschicht eine mittlere Korngröße im Bereich von 10 nm bis 75 nm, noch vorteilhafter von 11 nm, 12 nm, 13 nm, 14 nm, 15 nm, 16 nm, 17 nm, 18 nm, 19 nm, 20 nm, 21 nm, 22 nm, 23 nm, 24 nm, 25 nm, 26 nm, 27 nm, 28 nm, 30 nm, 31 nm, 32 nm, 33 nm, 34 nm und 35 nm, 36 nm, 37 nm, 38 nm, 39 nm, 40 nm, 41 nm, 42 nm, 43 nm, 44 nm, 45 nm 46 nm, 47 nm, 48 nm, 49 nm, 50 nm auf. Insbesondere in den hier aufgeführten Bereich von 10 bis 50 nm sind die ausgebildeten Kristallite und/oder Kristalle ausreichend klein. Besonders vorteilhaft haben sich mittlere Korngrößen im Bereich von 10 bis 30 nm hierzu erwiesen. Die hier beschriebenen mittleren Korngrößen sind für die Basismetalloxid-enthaltenden Kristallite, vorteilhafter Kristalle, anwendbar.

Besonders vorteilhaft weist die thermochrome Schicht einen kristallinen Anteil an Basismetalloxid-enthaltenden Kristalliten und/oder Kristallen von größer 80 Volumen-%, vorteilhafter von größer 90 Volumen-% und noch vorteilhafter von größer 95 Volumen-% auf. Dieser hohe kristalline Anteil kann vorteilhaft durch den Temperprozess der zunächst amorphen, thermochromen Schicht erzeugt werden. Dieser hohe kristalline Anteil ist von Vorteil, da hierdurch eine besonders hohe thermische und chemische Stabilität der thermochromen Schicht erzeugt werden kann und insbesondere die kristalline Form des Basismetalloxids zum gewünschten thermochromen Verhalten beiträgt.

Weiterhin vorteilhaft können die Fehlstellen auch als Poren ausgebildet sein, wobei unter Poren vorteilhaft makroskopische Ausnehmungen innerhalb der Basismetalloxid enthaltenden, thermochromen Schicht zu verstehen sind. Diese schaffen makroskopische Grenzen, welche sich ebenfalls auf die elektrische Leitfähigkeit der thermochromen Schicht negativ auswirken und diese verringern.

Darüber hinaus betrifft die vorliegende Erfindung auch ein Verfahren zur Herstellung eines Solarabsorbers, wenigstens die folgenden Schritte aufweisend:
a. Aufbringen einer Schicht aus wenigstens einem Basismetalloxid auf einem Absorberelement;
b. Dotierung der Schicht mit wenigstens einem metallischen Material;
c. Aufbringen wenigstens einer weiteren Schicht auf der Schicht wenigstens aufweisend ein Element der Kohlenstoffgruppe und/oder ein weiteres metallisches Material;
d. Temperaturbeaufschlagung des mehrschichtigen Solarabsorbers zur nachgeschalteten, diffusionsgesteuerten Dotierung der das Basismetalloxid enthaltenden Schicht, wobei unter Temperaturbeaufschlagung das in der thermochromen Schicht enthaltene Basismetalloxid zusammen mit dem Dotierungsmittel in Oxidform Kristallite zur Verringerung der spezifischen elektrischen Leitfähigkeit in den Bereich 10 - 500 1/ (Ω*cm) ausbildet.

Es ist auch denkbar, mit dem Aufbringen der amorphen Schicht diese auch zeitgleich mit wenigstens einem metallischen Material zu dotieren. Somit können die ersten beiden Verfahrensschritte zeitgleich stattfinden. Die Schicht wird durch das PVD-Verfahren auf die Absorberfläche aufgebracht. Somit wird eine amorphe Schichtstruktur ausgebildet.

Die Temperaturbeaufschlagung wird in wenigstens einem Temperprozess durchgeführt, bei welchem der Solarabsorber mit einer vorbestimmbaren Temperatur in einer vorbestimmbaren Zeit beaufschlagt wird, damit sich die kristallinen Anteile und thermochrome Eigenschaften ausbilden.

Als besonders vorteilhaft hat es sich in Schritt c) gezeigt, wenn auf der Schicht wenigstens eine weitere Schicht, beispielsweise eine Antireflexschicht und/oder eine Infrarot-Reflektorschicht und/oder eine Schutzschicht aufgebracht wird, welche beispielsweise Siliziumdioxid und/oder Aluminiumnitrid (AlN) und/oder Aluminiumoxid aufweist.

Dies ist selbstverständlich nicht begrenzend zu verstehen, sodass es auch denkbar ist, dass sowohl eine Schicht aus Siliziumdioxid als auch eine weitere Schicht aus Aluminiumnitrid auf der thermochromen Schicht aufgebracht ist. Hierbei wird die Reihenfolge der Schichten so gewählt, dass die Schicht mit größerem Brechungsindex näher an der thermochromen Schicht angeordnet ist.

Wird nun der Verfahrensschritt d) durchgeführt und der mehrschichtig ausgebildete Solarabsorber einem Temperprozess ausgesetzt, so kann kontrolliert und gezielt durch eine vorbestimmbaren Temperaturbeaufschlagung für ein vorbestimmbares Zeitintervall eine diffusionsgetriebenen Dotierung durchgeführt werden. Unter diffusionsgetriebenen Dotierung ist vorteilhaft eine Dotierung auf die Diffusionsbasis zu verstehen, welche durch Temperaturbeaufschlagung gezielt gesteuert werden kann. Durch die Temperaturbeaufschlagung des gesamten Solarabsorbers können gezielt bewegliche Kationen, beispielsweise Siliziumskationen und/oder Aluminiumskationen aus den beiden zusätzlich aufgebrachten Schichten, in die thermochrome Schicht überführt werden und diese somit dotieren. Auch diese Dotierung hat den gleichen Effekt, wie bereits oben beschrieben. Auch sie senkt die elektrische Leitfähigkeit der thermochromen Schicht deutlich ab, wobei die Schalttemperatur unverändert verbleibt.

Für den optimalen Schichtaufbau hat sich eine Gesamtschichtdicke, ohne Absorberelement, von 200 bis 750 nm ergeben. Dies entspricht in etwa ein Viertel der Wellenlänge des einstrahlenden, infraroten Lichts auf den Solarabsorber.

Der hier beschriebene Solarabsorber weist eine gute thermische und chemische Stabilität sowie Stabilität gegenüber Feuchtigkeit und aggressive Medien auf und verfügt zudem über eine reduzierte elektrische Leitfähigkeit unter unveränderter Schalttemperatur des Basismetalloxid in der thermochromen Schicht. Insbesondere eine direkte Dotierung und/oder die diffusionsgesteuerte Dotierung der Basismetalloxidschicht mit Aluminium weist eine deutlich verbesserte Resistenz gegen Feuchtigkeit auf

Der Vollständigkeit halber wird noch auf das Patentdokument US 7,761,053 B2 hingeweisen, aus dem es zwar ebenfalls bekannt ist, eine thermochrome Schicht zum Beispiel aus Vanadiumoxid und Aluminiumoxid zu bilden, dort liegen aber die genannten Bestandteile als ineinander eingebettete Kristalle vor, d. h. das Vanadiumoxid ist nicht in der erfindungsgemäßen Weise mit einem weiteren Metall dotiert.

Außerdem wird darauf hingewiesen, dass thermochrome Schichten zum Beispiel auch bei Sonnenschutzglasverglasungen eingesetzt werden, um den Effekt zu nutzen, dass thermochrome Materialien ihre Lichtabsorption in Abhängigkeit von der Temperatur ändern können (siehe hierzu auch: http://de.wikipedia.org/w/index.php? title=Intelligentes_Glas&oldid=131357527#Thermochromes_Glas).

Es wird ferner noch darauf hingewiesen, dass bei Verwendung von Vanadiumoxid oder Titanoxid als Basismetalloxid, wie oben beschrieben, stets eine Verschlechterung der elektrischen Leitfähigkeit anzustreben ist. Es sind aber auch Materialen als Basismetalloxid denkbar, bei denen erst eine Erhöhung der elektrischen Leitfähigkeit den angestrebten Effekt erbringt. Daher ist im Patentanspruch 1 zunächst ganz allgemein von einer "Veränderung", und dann im Speziellen von einer "Verringerung" der elektrischen Leitfähigkeit die Rede.

Der erfindungsgemäße Solarabsorber einschließlich seiner vorteilhaften Weiterbildungen gemäß der abhängigen Patentansprüche wird nachfolgend anhand eines bevorzugten Ausführungsbeispiels näher erläutert:
Dieser Solarabsorber besteht zunächst in an sich bekannter Weise aus einem Absorberelement mit einer infrarote Strahlung reflektierenden Oberfläche, die mit einer aus einem Basismetalloxid bestehenden, thermochromen Schicht versehen ist, wobei diese unterhalb einer Schalttemperatur eine niedrigere und oberhalb der Schalttemperatur eine höherere elektrische Leitfähigkeit aufweist. Das Absorberelement kann dabei, muss aber nicht, aus Metall sein. Falls es aus Metall gebildet ist, ist besonders bevorzugt vorgesehen, dass es wahlweise aus Aluminium oder Kupfer besteht. Bezüglich des Basismetalloxids ist weiterhin besonders bevorzugt vorgesehen, dass es aus Vanadiumoxid, also beispielsweise VO, V₂O₃, VO₂, V₂O₅ (siehe hierzu insbesondere: http://de.wikipedia.org/w/index.php?title=Vanadiumoxid& oldid= 55814365) besteht. Weiterhin ist vorgesehen, dass die thermochrome Schicht unterhalb der Schalttemperatur eine niedrigere und oberhalb der Schalttemperatur eine höhere Emissivität insbesondere im infraroten Bereich (Spektralbereich oberhalb von 1 µm) aufweist.

Ferner sind in an sich bekannter Weise auf der der thermochromen Schicht abgewandten Seite des Absorberelements angeordnete (zum Beispiel angelötete oder angeschweißte) Rohrleitungen zur Führung des eingangs genannten Wärmeträgermediums vorgesehen.

Wesentlich für den erfindungsgemäßen Solarabsorber ist nun, dass das Basismetalloxid zur Veränderung, insbesondere, wie oben erläutert, zur Verringerung der elektrische Leitfähigkeit oberhalb der Schalttemperatur wahlweise mit einem weiteren Metall und/oder einem Element der Kohlenstoffgruppe dotiert und/oder mit Fehlstellen versehen ausgebildet ist, wobei weiterhin besonders bevorzugt vorgesehen ist, dass das weitere Metall zur Veränderung, insbesondere Verschlechterung, der elektrischen Leitfähigkeit aus Aluminium, Gallium, Ferrum, Titan, Chrom besteht. Als Element der Kohlenstoffgruppe ist besonders bevorzugt Silicium vorgesehen. Wie eingangs erläutert, ist es auf diese Weise möglich, oberhalb der Schalttemperatur, die zum Beispiel etwa bei 70°C festgelegt wird, die Emissivität infraroter Strahlung im Wellenlängenbereich oberhalb von 1 µm gezielt zu beeinflussen, genauer gesagt, zu vergrößern, und zwar, wie Versuche ergeben haben, auf einen Wert oberhalb von 35% bzw. sogar oberhalb von 50%.

Schließlich sind von der Erfindung selbstverständlich auch solche Solarabsorber umfasst, die weitere Schichten wie Infrarot-Reflektorschichten, Schutzschichten, Haftschichten und/oder Antireflexschichten aufweisen.

## Patentansprüche

1. Solarabsorber, umfassend wenigstens ein Absorberelement mit einer infrarote Strahlung reflektierenden Oberfläche, die mit einer aus einem Basismetalloxid bestehenden, thermochromen Schicht versehen ist, wobei diese unterhalb einer Schalttemperatur eine niedrigere und oberhalb der Schalttemperatur eine höhere elektrische Leitfähigkeit aufweist,
**dadurch gekennzeichnet, dass**
das Basismetalloxid mit einem weiteren Metall und einem Element der Kohlenstoffgruppe derart dotiert ist, dass die elektrische Leitfähigkeit oberhalb der Schalttemperatur verringert ist, wobei unter Temperaturbeaufschlagung das in der thermochromen Schicht enthaltene Basismetalloxid zusammen mit dem Dotierungsmittel in Oxidform Kristallite so ausbildet, dass die elektrische Leitfähigkeit oberhalb der Schalttemperatur in den Bereich 10 - 500 1/(Ω*cm) verringert ist.

2. Solarabsorber nach Anspruch 1,
**dadurch gekennzeichnet, dass**
das weitere Metall aus der Erdalkalimetallgruppe, Alkalimetallgruppe, Borgruppe, Eisengruppe, Titangruppe, Chromgruppe und/oder Scandiumgruppe ausgewählt ist.

3. Solarabsorber nach Anspruch 2,
**dadurch gekennzeichnet, dass**
das weitere Metall eine maximale Wertigkeit von (+III) oder geringer aufweist.

4. Solarabsorber nach wenigstens einem der vorangegangenen Ansprüche,
**dadurch gekennzeichnet, dass**
das weitere Metall aus Aluminium, Gallium, Eisen, Titan, Chrom, Lithium, Natrium, Kalium, Yttrium, Zirkonium, Calcium, Indium oder Lanthan besteht.

5. Solarabsorber nach Anspruch 1,
**dadurch gekennzeichnet, dass**
als Element der Kohlenstoffgruppe Silicium vorgesehen ist.

6. Solarabsorber nach Anspruch 1,
**dadurch gekennzeichnet, dass**
das Basismetalloxid aus Vanadiumoxid besteht.

7. Solarabsorber nach einem der Ansprüche 1 bis 6,
**dadurch gekennzeichnet, dass**
das Absorberelement wahlweise aus Aluminium, Kupfer oder dergleichen besteht.

8. Solarabsorber nach Anspruch 1,
**dadurch gekennzeichnet, dass**
das Basismetalloxid weiterhin mit Fehlstellen versehen ausgebildet ist.

9. Solarabsorber nach Anspruch 8,
**dadurch gekennzeichnet, dass**
die Fehlstellen als Löcher, Kristallgrenzen oder Poren ausgebildet sind.

10. Solarabsorber nach Anspruch 9,
**dadurch gekennzeichnet, dass**
die aus Basismetalloxid bestehende, thermochromen Schicht eine Vielzahl an Kristallgrenzen aufweist.

11. Solarabsorber nach Anspruch 10,
**dadurch gekennzeichnet, dass**
innerhalb der aus Basismetalloxid bestehenden, thermochromen Schicht wenigstens 1.000 bis 1.000.000 Kristallite und/oder Kristalle pro Kubikmikrometer ausgebildet sind.

12. Solarabsorber nach Anspruch 8,
**dadurch gekennzeichnet, dass**
die aus Basismetalloxid bestehende, thermochrome Schicht 0,01 bis 30 Atomprozent Metallfehlstellen aufweist.

13. Verfahren zur Herstellung eines Solarabsorbers, nach wenigstens einem der vorangegangenen Ansprüche, wenigstens die folgenden Schritte aufweisend:
a. Aufbringen einer Schicht aus wenigstens einem Basismetalloxid auf einem Absorberelement;
b. Dotierung der das Basismetalloxid enthaltenden Schicht mit wenigstens einem metallischen Material;
c. Aufbringen wenigstens einer weiteren Schicht auf der Schicht wenigstens aufweisend ein Element der Kohlenstoffgruppe und ein weiteres metallisches Material;
d. Temperaturbeaufschlagung des mehrschichtigen Solarabsorbers zur nachgeschalteten, diffusionsgesteuerten Dotierung der das Basismetalloxid enthaltenden Schicht, wobei unter Temperaturbeaufschlagung das in der thermochromen Schicht enthaltene Basismetalloxid zusammen mit dem Dotierungsmittel in Oxidform Kristallite zur Verringerung der spezifischen elektrischen Leitfähigkeit in den Bereich 10 - 500 1/(Ω*cm) ausbildet.

## Claims

1. Solar absorber, comprising at least one absorber element with an infrared reflecting surface, which is equipped with a thermochromic layer consisting of base metal oxide, wherein the thermochromic layer has a lower electrical conductivity below a switching temperature and a higher electrical conductivity above the switching temperature,
**characterized in that**
the base metal oxide is doped with a further metal and an element of the carbon group in such a way that the electrical conductivity is reduced above the switching temperature, wherein the base metal oxide contained in the thermochromic layer forms crystallites together with the dopant in oxide form by applying of temperature in such a way that the electrical conductivity above the switching temperature is reduced to the range of 10-500 1/(Ω*cm).

2. Solar absorber according to claim 1,
**characterized in that**
the further metal is selected from the alkaline earth metal group, alkali metal group, boron group, iron group, titanium group, chromium group and/or scandium group.

3. Solar absorber according to claim 2,
**characterized in that**
the further metal has a maximum valency of (+III) or lower.

4. Solar absorber according to at least one of the preceding claims,
**characterized in that**
the further metal consists of aluminum, gallium, iron, titanium, chromium, lithium, sodium, potassium, yttrium, zirconium, calcium, indium or lanthanum.

5. Solar absorber according to claim 1,
**characterized in that**
silicon is provided as an element of the carbon group.

6. Solar absorber according to claim 1,
**characterized in that**
the base metal oxide consists of vanadium oxide.

7. Solar absorber according to one of the claims 1 to 6,
**characterized in that**
the absorber element consists optionally of aluminum, copper or the like.

8. Solar absorber according to claim 1,
**characterized in that**
the base metal oxide is still formed with defects.

9. Solar absorber according to claim 8,
**characterized in that**
the defects are formed as p-holes, crystal boundaries or pores.

10. Solar absorber according to claim 9,
**characterized in that**
the thermochromic layer consisting of base metal oxide has a large number of crystal boundaries.

11. Solar absorber according to claim 10,
**characterized in that**
within the thermochromic layer consisting of base metal oxide at least 1,000 to 1,000,000 crystallites and/or crystals are formed per cubic micrometer.

12. Solar absorber according to claim 8,
**characterized in that**
the thermochromic layer consisting of base metal oxide has 0.01 to 30 atomic percent metal defects.

13. Method of manufacturing a solar absorber according to at least one of the preceding claims comprising at least the following steps:
a. Applying a layer of at least base metal oxide to an absorber element;
b. Doping the layer containing the base metal oxide with at least one metallic material;
c. Applying at least one further layer to the layer comprising at least one element of the carbon group and another metallic material;
d. Applying temperature to the multi-layer solar absorber for downstream diffusion-controlled doping of the layer containing the base metal oxide, wherein under temperature application the base metal oxide contained in the thermochromic layer together with the dopant in oxide form forms crystallites for reducing the specific electrical conductivity in the range 10-500 1/(Ω*cm).

## Revendications

1. Absorbeur solaire, comprenant au moins un élément absorbeur comprenant une surface réfléchissant le rayonnement infrarouge, qui est dotée d'une couche thermochrome se composant d'un oxyde métallique de base, celle-ci présentant, en dessous d'une température de commutation, une conductivité électrique plus faible et, au-dessus de la température de commutation, une conductivité électrique plus élevée, **caractérisé en ce que** l'oxyde métallique de base est dopé avec un autre métal et un élément du groupe carbone de sorte que la conductivité électrique soit réduite au-dessus de la température de commutation, l'oxyde métallique de base présent dans la couche thermochrome, conjointement avec l'agent dopant sous la forme d'oxyde, formant des cristallites une fois soumis à la température, de sorte que la conductivité électrique soit réduite dans la plage de 10 à 500 1/(Ω*cm) en dessous de la température de commutation.

2. Absorbeur solaire selon la revendication 1, **caractérisé en ce que** l'autre métal est choisi parmi le groupe des métaux alcalino-terreux, le groupe des métaux alcalins, le groupe bore, le groupe fer, le groupe titane, le groupe chrome et/ou le groupe scandium.

3. Absorbeur solaire selon la revendication 2, **caractérisé en ce que** l'autre métal présente une valence maximale de (+III) ou moins.

4. Absorbeur solaire selon au moins l'une des revendications précédentes, **caractérisé en ce que** l'autre métal se compose d'aluminium, de gallium, de fer, de titane, de chrome, de lithium, de sodium, de potassium, d'yttrium, de zirconium, de calcium, d'indium ou de lanthane.

5. Absorbeur solaire selon la revendication 1, **caractérisé en ce que** l'on prévoit du silicium comme élément du groupe carbone.

6. Absorbeur solaire selon la revendication 1, **caractérisé en ce que** l'oxyde de métal de base se compose d'oxyde de vanadium.

7. Absorbeur solaire selon l'une des revendications 1 à 6, **caractérisé en ce que** l'élément absorbeur se compose sélectivement d'aluminium, de cuivre ou similaire.

8. Absorbeur solaire selon la revendication 1, **caractérisé en ce que** l'oxyde métallique de base est conçu en outre pour être doté d'emplacements vides.

9. Absorbeur solaire selon la revendication 8, **caractérisé en ce que** les emplacements vides sont conçus sous la forme de trous, de limites de cristaux ou de pores.

10. Absorbeur solaire selon la revendication 9, **caractérisé en ce que** la couche thermochrome se composant d'oxyde métallique de base présente une multitude de limites de cristaux.

11. Absorbeur solaire selon la revendication 10, **caractérisé en ce qu'**au moins 1 000 à 1 000 000 cristallites et/ou cristaux par micromètre cube sont formés à l'intérieur de la couche thermochrome se composant d'oxyde métallique de base.

12. Absorbeur solaire selon la revendication 8, **caractérisé en ce que** la couche thermochrome se composant de l'oxyde métallique de base présente 0,01 à 30 % atomique d'emplacements vides de métal.

13. Procédé de production d'un absorbeur solaire, selon au moins l'une des revendications précédentes, comprenant au moins les étapes suivantes consistant à :
a. déposer une couche d'au moins un oxyde métallique de base sur un élément absorbeur ;
b. doper la couche comprenant l'oxyde métallique de base avec au moins un matériau métallique ;
c. déposer au moins une autre couche sur la couche présentant au moins un élément du groupe carbone et un autre matériau métallique ;
d. soumettre à la température l'absorbeur solaire multicouche pour le dopage postérieur contrôlé en diffusion de la couche comprenant l'oxyde métallique de base, l'oxyde métallique de base présent dans la couche thermochrome, conjointement avec l'agent dopant sous la forme d'oxyde, formant des cristallites une fois soumis à la température pour la réduction de la conductivité électrique spécifique dans la plage de 10 à 500 1/(Ω*cm).
